Europäisches Patentamt

European Patent Office

Office européen des brevets

(11) Publication number: **0 457 516 A1**

# (12) EUROPEAN PATENT APPLICATION

(21) Application number: **91304239.6**

(22) Date of filing: **10.05.91**

(51) Int. Cl.⁵: **C04B 28/26, // (C04B28/26, 14:26, 22:06)**

(30) Priority: **18.05.90 NO 902203**
**13.08.90 NO 903549**

(43) Date of publication of application:
**21.11.91 Bulletin 91/47**

(84) Designated Contracting States:
**AT CH DE FR GB IT LI SE**

(71) Applicant: **NORSK PROCO A/S**
**c/o Johannes G. Berg Fagerstrandvn. 58**
**N-1322 Hovik (NO)**

(72) Inventor: **Berg, Johannes G.**
**Fagerstrandvn. 58**
**N-1322 Hovik (NO)**

(74) Representative: **Wilkinson, Stephen John et al**
**Stevens, Hewlett & Perkins 1 St. Augustine's**
**Place**
**Bristol BS1 4UD (GB)**

(54) **A fireproof, waterproof, and acidproof binder.**

(57)     A fireproof, waterproof, and acidproof binder is characterized by a hardened composition of 10-90% by weight of alkali silicate, comprising sodium waterglass or potassium waterglass, or a mixture of the same, 1-40% by weight of reactive metal oxide from the group comprising magnesium, titanium, and zinc, preferably magnesium oxide, 1-70% by weight of calcium/magnesium carbonate, preferably dolomite and, if desired, magnesium silicate, felspat, a chemically active micro silica, potassium/sodium-aluminium silicate, sodium carbonate, expanded clay, wood fibres, cement, limestone dust, sand, an organic binder, water or a mixture of the same.

EP 0 457 516 A1

The present invention relates to a fireproof, waterproof, and acidproof binder based on a hardened composition of alkali silicate, a reactive metal oxide from the group including magnesium, titanium, and zinc, calcium/magnesium carbonate, and, if desired, magnesium silicate, felspar, chemically active microsilica, potassium/sodium- aluminium silicate, sodium carbonate, expanded perlite and expanded clay, wood fibres, cement, limestone dust, sand, organic binders, or mixtures thereof.

In patent literature several combinations are disclosed which include alkali silicate, other silicates, oxides, phosphates, and chlorides.

As distinct from the above mentioned, reaction products of compositions which, among others, contain some of the mentioned components, in combination with other components included in the present invention, may be used for a fireproof material, glue, inter alia, for sheet and paper products, waterproof and acidproof coats, e.g. on concrete and Leca products, and for other applications where there are strict combined requirements as regards fire resistance, water resistance, acid resistance and mechanical qualities.

US-PS No. 1 762 911 relates to the manufacture of a material for sealing fireworks which comprises a mixture of approximately 50% waterglass, approximately 10% metal oxide, and approximately 40% aluminium silicate or kaolin. This specification contains no disclosure of qualities which are relevant to the present application, but is basic for later applications of oxide-alkali silicate compounds.

US-PS 1 757 470 relates to the manufacture of a fireproof and heat insulating material which, in addition to the mentioned and known oxide-alkali silicate compounds, comprises the waste product from manufacture of various soda compounds, essentially calcium compounds. Fire preventing and heat insulating qualities are probable, but are not documented in the specification.

US-PS 3 707 396 relates to the manufacture of an impregnating agent/binder consisting of 100 parts by weight of alkali silicate, 1-35 parts by weight of a finely divided material from the group comprising silicium, ferro-silicium, copper-silicium, calcium-silicium compounds and mixtures of the same with 1-25 parts by weight of a finely divided oxymetal compound with grain size below 100 micron and a smooth surface.

This patent, thus, essentially relates to combinations of silicium metal compounds and oxymetal compounds and the effect of such compounds on alkali silicate bonds due to the fact that the added silicon compounds are transformed into $SiO_2$ and form insoluble alkali metal/silicate compounds. According to the specification optimal effects are achieved with defined and relatively fine grain sizes both as regards the silicon compounds and metal oxides of interest. There is reason to suppose that the alkali silicate-metal oxide reactions are decisive as regards the water resistance of the reaction product, whereas the silicon metal compounds improve the mechanical qualities and influence remaining resistance qualities, even though this does not appear from the specification.

The European patent application 0 001 091 relates to the manufacture of prepolymer based on alkali silicate and metal oxides which are, via a preliminary reaction and step-wise drying/condensation transformed into a material which is suitable for shaping and pressing.

The European patent application 0240.940 relates to a composition for the manufacture of hydrophilous film forming a coat on aluminium and comprising alkali silicate, an inorganic accelerator, and a water soluble organic mixture of high molecular weight. The inorganic accelerator consists of a mixture from the group comprising aluminium phosphate, magnesium phosphate, trivalent phosphoric acid, magnesium oxide, zinc oxide, and carbonates, sulphates, sulphites, and chlorides of polyvalent metals. The application essentially relates to combinations of alkali silicate, inorganic accelerators on the mentioned basis, and said organic mixtures.

US-PS 4 762 753 relates to a mixture which acts as a foundation for a surface coat and essentially consists of an acqueous solution with 4-16% by weight of solids, 24-38% by weight of alkali silicate, 18-28% of magnesium oxide, magnesium hydroxide, and mixtures of the same, 7-19% of titanium oxide, 22-53% of mica. The coat is suitable for forming an electrically insulating coat on metal products.

US-PS 4 789 652 relates to a fireproof material for lining melting furnaces which, inter alia, contains fireproof basic materials including overburned magnesite, called "magnesia clinker". Overburned magnesite is produced at temperatures of 1600 - 1700°C and is distinguished by high resistance against high temperatures. The material has no reactive power, in contrast to magnesium oxide which is manufactured by calcination in the temperature region of 800 - 900°C.

Said patent application utilizes the reactive qualities of calcinated magnesium oxide both as regards its strength and quality of water resistance. Overburned magnesite in thy form of magnesia clinker does not contribute to any of these qualities, but it shows considerably better qualities in case of high temperature loads than does calcinated magnesium oxide. In the application in question this lacking quality is compensated by use of small amounts of calcinated magnesium oxide together with other raw materials, e.g. amorphous micro silica, olivine, felspar, and nepheline.

The present invention relates to a fireproof waterproof and acidproof binder which is characterized by a hardened composition of alkali silicate, reactive metal oxide from the group comprising magnesium, titanium, zinc, calcium/magnesium carbonate and, if desired, olivine, if desired felspar, if desired a chemically active micro silicate, if desired potassium/sodium-aluminium silicate, if desired sodium carbonate, if desired expanded perlite, if desired expanded clay, if desired cement, if desired limestone dust, if desired wooden fibres, if desired sand, and if desired an organic binder or a mixture of the same.

What is new and essential in the present invention is that the reaction products of the disclosed binder combinations will be strong, fireproof, waterproof, and acidproof after hardening of the final composition without any increased pressure and temperature. Hardening may also occur at increased pressure and temperature if reduced hardening periods are desired. Strong reaction products are achieved with short periods of pressure, also when there are high percentages of absorbing materials and other fillers.

Upon hardening in air, if desired, at an increased temperature, alkali silicate in the form of waterglass yields a brittle reaction product with a hard surface. This reaction product is not waterproof but is highly resistant to fire.

Reactive magnesium oxide and/or a reactive oxide of titanium and/or zinc forming a component of a composition including waterglass will improve the waterproof quality of the hardened product, but it will influence its fireproof quality, the reaction product at high temperature loads tending to pulverization, with the degree of pulverization depending on the percentage by weight of magnesium oxide relative to waterglass, on the temperature and partly on the duration of the temperature load. The remaining prescribed components of the completed mixture eliminate said tendency to pulverization of the final reaction product. Especially in combination with amorphous micro silica and cement said component also contributes to increased solidity/stability of the final reaction product.

Dolomite develops carbon dioxide gas when subjected to intense heat, and this gas has a fire retarding effect. This quality, together with an increase of volume of waterglass in case of intense heat, is essential for increasing the fire retarding effect of mixtures containing the prescribed components, and one or a number of the remaining components. Said component will cause a moderate increase of viscosity of the final mixture.

Magnesium silicate in the form of olivine in combination with the prescribed components and, if desired, one or a number of the remaining components, will increase formation of gas/bubbles in the final mixture, and this quality may be utilized in combination with other known foaming agents if a foam-like final reaction product is desired. This component also contributes to increased strength and prolonged pot-life, and viscosity is moderately increased.

Felspar forming a component of the mixture, if desired in combination with one or a number of the other components, will considerably enhance the mechanical qualities in case of high temperature loads. With gauges in the range from below 5 micron and upwards felspar and amorphous micro silica complement each other as regards an efficient grain structure of the final mixture. The felspar component will increase the degree of ceramization of the hardened product at high temperature loads and, thus, improve its mechanical qualities. The felspar component influences viscosity and contributes to increased strength at normal temperatures as well.

Chemically active micro silica in the form of amorphous micro silica in combination with the prescribed components and, if desired, one or a number of the remaining components enhances the strength and acidproof quality of the final raction product, both when hardened at room temperature and at increased temperatures. Viscosity, gel-time, and pot-life of the mixture may also be influenced based on alternative gauges of amorphous micro silica, and the same is true of mechanical qualities, both in case of normal and increased temperatures.

Amorphous micro silica in the form of silica dust recovered from the waste gases in manufacture of ferro silicon metal will satisfy the highest requirements for fineness with a mean grain size from 0.1 to 0.2 micron.

Nepheline in addition to the prescribed components and, if desired, in combination with one or a number of the remaining components, will supplement the thermal qualities, especially relative to the felspar component.

Due to its practical availability within wide variations of fineness of the material, and due to its thermal qualities, nepheline may also be efficiently utilized as an adjusting component as regards the total grain structure of the solids in the final mixture.

Washing soda in addition to the prescribed components and, if desired, in combination with one or a plurality of the remaining components, will affect vscosity, gel-time and pot-life of the final mixture and will influence the stability f the reaction product in a positive manner.

Expanded clay and expanded perlite in addition to the other components will contribute to enhance the acidproof quality and reduce the weight of the final reaction product. Perlite also acts as a most efficient absorbent of moisture.

Cement forming an active binder component in combination with the prescribed components and, if desired, one or a plurality of the remaining components contributes to more rapid hardening and will enhance the strength and other stability qualities of the final reaction product. The component utilizes excessive water of the mixture and will, thus, also reduce the need for evaporating excessive moisture in the final reaction product.

Limestone dust in the form of chalk in combination with the prescribed components and, if desired, one or a plurality of the remaining components, will yield an approximately white reaction product, to which dye may be added, and which, thus, also permits light colors when the composition is used to form a surface coat, e.g. on concrete-like products.

Sand, preferably in the form of fine quarz sand forming a component with the prescribed components and, if desired, with one or a plurality of the remaining components, will contribute to provide a desired grainy structure of the final mixture and also to increased hardness of the final reaction product.

The organic binder component is especially suitable if the final mixture is to form a binder/glue in composition which also contain other organic components, e.g. wood fibres, and in this connection it will influence the waterproof quality and mechanical quality. The component, and especially ethylene glycol also prevents fissuring of the hardened mixture.

Example 1 (Lab.No. 241)

1. Waterglass          50%
2. Magnesium oxide     20%
3. Dolomite            30%
                      100%

Continuous mixing.

The mixture is hardened at room temperature. After 48 hours the hardened product is hard and rigid. After immersion in water for 10 days, and upon freezing/thawing cycles no visible change of the product is observed. Upon immersion in hydrochloric acid (33%) and acetic acid (60%) also no visible change is observed.

The product is subjected to temperature loads by a point flame of approximately 1100°C for 30 minutes and tolerates such treatment without disintegrating.

The mixture forming a coat on surfaces of concrete, Leca, and brick yields hard surfaces adhering strongly to the foundation. Any fissuring during hardening of such coats may be compensated by optimalization of the total grain structure of the mixture, or in other manners which are discussed in connection with other Examples.

Example 2 (Lab. No. 273)

1. Waterglass          44%
2. Magnesium oxide     11%
3. Dolomite            11%
4. Felspat             28%
5. Micro silica         6%
                      100%

Are continuously mixed.

The mixture is hardened at room temperature. The hardened product has mechanical qualities which are slightly better than in Example 1. Water resistance is good, but some rubbing off occurs in the preliminary phase, this stops after some hours. The product shows good fire resistance and develops like a ceramic at temperature loads of more than approximately 900°C. It tolerates flame loads with point burner at approximately 1400°C for more than 1 hour.

Example 3 (Lab. No. 242)

| | | |
|---|---|---|
| 1. Waterglass ) Premix | 45% |
| 2. Soda ) | 9% |
| 3. Magnesium oxide | 18% |
| 4. Dolomite | 28% |
| | 100% |

The mixture is hardened at room temperature. The sodium carbonate component in the form of soda prolongs pot-life and reduces the viscosity of the mixture, and hardening is slightly slower. Qualities of the final hardened product are like those of Example 1.

A portion of Portland cement of approximately 10% of the mixture will reduce pot-life of the mixture by more than 50% Hardening is quicker, but slower than in case the portion of Portland cement is added to a mixture without the soda component.

Example 4

| | | |
|---|---|---|
| 1. Waterglass | 33% |
| 2. Magnesium oxide | 6% |
| 3. Dolomite | 20% |
| 4. Olivine | 35% |
| 5. Waterglass | 6% |
| | 100% |

The mixture has a pot-life of approximately 60 min.

The mixture is hardened at room temperature. The hardened product has mechanical qualities like those of Example 1.

The product develops like a ceramic at temperature loads of more than 900°C and tolerates flame loads of approximately 1400°C for more than 1 hour.

Example 5 (Lab. No. 442)

| | | |
|---|---|---|
| 1. Waterglass ) | 34% |
| 2. Magnesium oxide) Premix | 6% |
| 3. Dolomite ) | 13% |
| 4. Felspar ) | 7% |
| 5. Fine wood chips | 11% |
| 6. Perlite, expanded | 3% |
| 7. Leca, crushed | 9% |
| 8. Nepheline, rough | 4% |
| 9. Micro silica | 13% |
| | 100% |

The premix is admixed in two batches: after 5 and 8.

The mixture is hardened at increased pressure and temperature. A pressing period of 4 minutes at 170°C.

The product was tested and complies with requirements for fire resistance according to Class $A_2$/DIN 4102.

5

Example 6 (Lab. No. 446)

1. Waterglass        )                30%
2. Magnesium oxide)                    6%
3. Vinyl acetate disp.) Premix         5%
4. Dolomite          )                17%
5. Phenol glue powder  )               4%
6. Waterglass          )               5%
7. Wood chips, rough                  15%
8. Wood chips, fine                   18%
                                      100%

The premix is admixed in two batches, after 7 and 8.

The mixture is hardened at increased pressure and temperature. Pressure duration of 4 minutes at 180°C.
Bending strength 10.5 MPa
Transversal internal bond 0.63 Mpa
Swelling in thickness after 2 hours: 2.4%
swelling in thickness after 24 hours: 6.3%.

Example 7 (Lab.No. 358)

1. Wood chips, fine                   15%
2. Waterglass          )              10%
3. Melamine powder     ) Premix        6%
4. Waterglass                         36%
5. Magnesium oxide                     7%
6. Dolomite                           13%
7. Perlite, expanded                   3%
8. Micro silica                       10%
                                      100%

The premix is admixed with wood chips and then mixing occurs continuously.

The mixture is hardened at room temperature, but it may also be hardened under increased pressure at normal or increased temperature. The final product is approximately 30% more lightweight than that of Example 2, but with poorer mechanical qualities. By reinforcing the mixture it is possible to improve the mechanical qualities and weight may be further reduced by higher proportions of light-weight components. Crushed Leca is also suited for such mixtures.

Example 8 (Lab. No. 500)

| | | |
|---|---|---|
| 1. | Waterglass | 38% |
| 2. | Magnesium oxide | 8% |
| 3. | Dolomite | 21% |
| 4. | Urea glue powder | 7% |
| 5. | Vinyl acetate disp. | 3% |
| 6. | Water | 2% |
| 7. | Dolomite | 11% |
| 8. | Waterglass | 10% |
| | | 100% |

Continuously mixed.

The mixture is hardened at room temperature. The hardened product is not dissolved after 20 days of immersion in water. Upon 20 freezing/thawing cycles there is no visible change to be observed. This is also true of the product forming a coat on Leca surface.

Example 9 (Lab. No. 517)

| | | |
|---|---|---|
| 1. | Waterglass | 37% |
| 2. | Magnesium oxide | 7% |
| 3. | Dolomite | 37% |
| 4. | Leca, crushed | 15% |
| 5. | Waterglass | 4% |
| | | 100% |

Continuous mixing.

The mixture is hardened at room temperature. The hardened product has qualities similar to those of Example 2, but it is more suitable for a coat on surfaces of Leca, concrete, and brick, since the product does not fissure during hardening.

Example 10 (Lab. No. 521)

| | | |
|---|---|---|
| 1. | Waterglass | 34% |
| 2. | Magnesium oxide | 5% |
| 3. | Dolomite | 49% |
| 4. | Ethylene glycol | 4% |
| 5. | Dolomite | 8% |
| | | 100% |

Continuous mixing.

The mixture is hardened at room temperature. The hardened product is especially suitable for smooth coats on a foundation of Leca, concrete, and brick, since the hardened product does not fissure and has qualities similar to those achieved in Example 1, apart from mechanical qualities which are slightly reduced but sufficient for a surface coat in the mentioned connection.

The product coated onto a Leca surface does not dissolve after being submersed in water for 20 days. Upon 20 freezing/thawing cycles no change is observed.

**Claims**

1. A fireproof, waterproof, and acidproof binder, **characterized** in a hardened composition of 10-90% by weight of alkali silicate, comprising sodium waterglass or potassium waterglass or mixtures of said waterglass materials, 1-40% by weight of reactive metal oxide from the group comprising magnesium, titanium, and zinc, preferably magnesium oxide, 1-70% by weight of potassium/magnesium carbonate, preferably dolomite and, if desired, magnesium silicate, if desired felspat, if desired chemically active microsilica, if desired potassium/sodium-aluminium silicate, if desired sodium carbonate, if desired expanded clay, if desired wood fibres, if desired cement, if desired limestone dust, if desired sand, if desired an organical binder, if desired water, or mixtures thereof.

2. A binder according to claim 1,
   **characterized** in that
   it contains                                                    0-50% by weight
   of magnesium silicate, preferably olivin.

3. A binder according to claims 1-2,
   **characterized** in that
   it contains                                                    0-40% by weight
   of felspat, consisting of sodium felspat
   or calcium felspat or potassium felspat,
   or a mixture of two or three thereof.

4. A binder according to claims 1-3,
   **characterized** in that
   it contains                                                    0-30% by weight
   of chemically active microsilica,
   preferably amorphous microsilica.

5. A binder according to claims 1-4,
   **characterized** in that
   it contains                                                    0-40% by weight
   of potassium/sodium-aluminium silicate,
   preferably nepheline.

6. A binder according to claims 1-5,
   **characterized** in that
   it contains                                                    0-10% by weight
   of sodium carbonate, preferably washing
   soda.

7. A binder according to claims 1-6,
   **characterized** in that it contains 0-10% by weight of expanded perlite, 0-30% by weight of expanded clay, 0-40% by weight of wood fibres, 0-10% by weight of cement, preferably Portland cement, 0-20% by weight of limestone dust, preferably chalk, 0-30% by weight of sand, preferably fine quartz sand.

8. A binder according to claims 1-7,
   **characterized** in that
   it contains                                                    0-40% by weight
   of one or more of organic binder
   components.

9. A binder according to claims 1-8,
   **characterized** in that the organic component is based on urea, melamine, phenol, vinyl acetate, ethylene glycol, white spirit, acryl, bitumen, tall oil resin, or mixtures of two or more of said components.

**European Patent Office**

# EUROPEAN SEARCH REPORT

Application Number

EP 91 30 4239

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-1 628 206 (H.F. WEISS et al.) * Page 1, lines 10-14; claim 10 * | 1,7 | C 04 B 28/26 // (C 04 B 28/26 C 04 B 14:26 C 04 B 22:06 ) |
| Y | GB-A-1 153 299 (F.W.A. KURZ) * Claims 1,3,10,12 * | 1,7 | |
| A | CHEMICAL ABSTRACTS, vol. 90, no. 6, 5th February 1979, page 270, column 4, abstract no. 43197v, Columbus, Ohio, US; & JP-A-78 072 018 (HIDA K.K.) 27-06-1978 * Abstract * | 1-4,7 | |
| A | NL-A- 72 125 (A.E. COMISSO) * Claims 1,2 * | 1,2,7 | |
| A | GB-A- 502 044 (A.T.B. KELL) * Claims 1,2 * | 1,4,6 | |
| A | FR-A-1 195 743 (Y. DU TETRE) * Claims 1,2 * | 1,8 | TECHNICAL FIELDS SEARCHED (Int. Cl.5) |
| A | US-A-2 656 281 (R.D. WASSERMAN) * Column 2, lines 1-9 * | 1,6 | C 04 B 28 |
| A | CHEMICAL ABSTRACTS, vol. 108, no. 22, 30th May 1988, page 319, abstract no. 191723u, Columbus, Ohio, US; & JP-A-63 017 039 (NIPPON ZEON CO., LTD) 25-01-1988 | 1,4 | |
| A | US-A-4 746 555 (J.S. LUCKANUCK) | | |

The present search report has been drawn up for all claims

| Place of search | Date of completion of the search | Examiner |
|---|---|---|
| THE HAGUE | 19-08-1991 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)